# EUROPEAN PATENT SPECIFICATION

(11) **EP 1 340 647 B1**
(45) Date of publication and mention of the grant of the patent: **12.01.2011**
(21) Application number: 03003701.4
(22) Date of filing: 18.02.2003
(51) Int. Cl.: B60N 2/02

(54) **Manual control for the regulation of the position of a seat**
Handbediengerät für die Positionsregelung eines Sitzes
Commande manuelle pour le réglage de la position d'un siège

(30) Priority: 27.02.2002 IT TO20020165
(43) Date of publication of application: 03.09.2003
(73) Proprietor: BITRON S.p.A., 10042 Nichelino (Torino) (IT)
(72) Inventor: Bono, Michelangelo, 12020 Brossaco (CN) (IT)
(74) Representative: Lotti, Giorgio

(56) References cited:
- EP-A- 0 466 572
- DE-A- 19 952 560
- GB-A- 2 333 226

## Description

The present invention refers to a manual control for the regulation of the position of a seat of a motor-vehicle.

Nowadays, seats of high-class motor-vehicle, and more in particular the seat of the driver, should be adjustable in many ways. For instance, it can be possible to adjust both the length and the height of the bottom of the seat as well as the inclination of the back of the seat and so on.

These adjustments can be achieved by means of lever mechanism and/or gears moved by a certain number of small electrical motors which imply the presence of a complex electrical circuit, since each motor is supposed to be able to operate independently.

It is obvious that these circuits need a central control system located where the user can easily reach it, generally at one side of the seat.

Among the different control system it is already known the one illustrated by patent EP 0466572. It presents a box containing feeding circuits for the different motors controlling the different parts of the seat. These circuits, which are fed by a power source on the motor vehicle, allow the motor vehicle to rotate and to reverse their direction of rotation by means of a device to reverse and control the selection of the different motors by means of a wheel. The wheel presents contacts each one of which controls the control circuit of one of the motors associated to a certain part of the seat. Said wheel is integral with an indicator device which, by showing in a special window certain signals, allows to find the circuit corresponding to the part of the seat that the driver intends to move.

A control device of this type allows to rapidly select the part of the seat that is to be moved yet keeps the driver quite busy looking in the small windows for the circuit he needs. This operation may force the driver to stop the car when he intends to use this control in order to avoid any accidents to occur.

It is an object of the present invention to provide a manual control for a seat of a motor vehicle that overcomes the aforementioned drawbacks.

Said object is achieved by means of the present invention which provides a manual control to adjust the position of a seat presenting the characteristics set forth in claim 1.

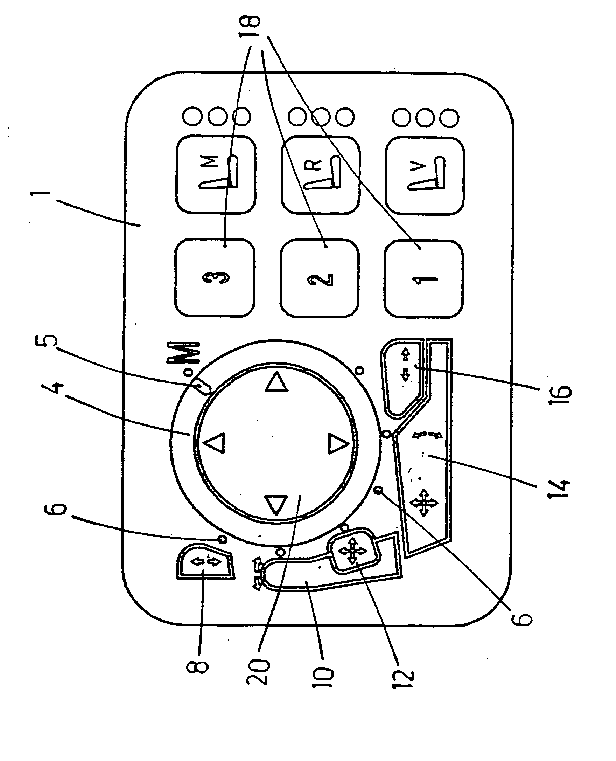

Additional characteristics and advantages will become more clear from the following description referring to the appended drawing provided as non-restrictive example and showing a front view of the control of the invention.

With reference to the figure, reference number 1 indicates the upper part of the box containing the contacts and the mechanisms of the switches of the adjustment control for the seat according to the present invention. Said upper part serves as support to a rotating knob-switch 4, with a starting - reference 5, actuating on a series of contacts 6 which are closed as a consequence of the rotation of the knob on its axis. Said contacts are located in correspondence with the different parts of the figure of a seat, which are made, for instance, by means of silk-screen painting or laser etching, are backlighted and located around the knob 4 in order to represent the seat. These parts are adapted to become lighted, according to a known technique already applied in similar arrangements, when the corresponding contact is closed. By observing the figure it is possible to identify a headrest 8, a back of the seat 10, a lumbar support for the driver 12, bottok of the seat 14 and a support for the thigh 16 of the driver. Each contact 6 is of course adapted to close a dedicated electrical circuit which allows to operate the corresponding electrical motor/s in order to position each part of the seat in the desired position. The following adjustments will then be achieved - as indicated by the lighted figures: a)vertical adjustment of the headrest; b) adjustment of the inclination of the back of the seat; c) adjustment in the four directions of the lumbar support; d) adjustment in the four directions of the bottom of the seat; e) adjustment of the inclination of the seat; f)longitudinal adjustment of the support for the thigh. It is evident that in order to achieve all the aforementioned adjustments the switch 4 needs at least 6 contacts that can be reached in succession in both directions of rotation. An additional contact, indicated by M, indicates the position of the switch in which it is possible to set the seat according to predefined and stored parameters, being possible to recall these parameters by means of buttons 18, existing three of them in this example. Concentrically to the switch 4 there is a tilt button switch 20, of a known type, with four arrows located at the cardinal points of its circumference pressing which it is possible to achieve the desired movements up-down, right-left, of the part of the seat that has been previously selected by means of the switch 4.

## Claims

1. Manual control to adjust the position of the seat of a motor vehicle in order to allow the vertical and longitudinal displacement of the different component parts of the seat, the control being located into a box housed in a part of the passenger compartment or on the seat itself, and containing the circuits to supply electric power to the motors adapted to move the different parts of the seat in both directions of rotation, the selection of the different control circuits being realised by means of a rotating knob switch (4) provided with contacts (6) to close one or more of the circuits supplying electric power to the motors for each one of the parts (8, 10, 12, 14, 16) to be moved, and **characterised in that** each of said contacts is located in correspondence with a backlighted figure representing the part of the seat that can be moved by means of the corresponding contact; said figures becoming backlighted when the corresponding contact is closed by the rotating knob switch (4).

2. Manual control as claimed in claim 1, **characterised in that** the knob (4) presents an annular shape and that inside it, and coaxial to it, there is a tilt circular button (20) with four operating points located at the four cardinal points intended to move vertically and horizontally in both directions the parts of the seat that have been selected by means of the button (4).

3. Manual control as claimed in claim 1, **characterised in that** on the backlighted figures (8, 10, 12, 14, 16) the directions of the movement of the correspondent parts of the seat are indicated by means of arrows.

## Patentansprüche

1. Manuelle Steuerung zum Einstellen der Position des Sitzes eines Motorfahrzeugs, um die Vertikal- und Längsverschiebung der verschiedenen Bestandteile des Sitzes zu ermöglichen, wobei die Steuerung in einem Gehäuse angeordnet ist, das in einem Teil des Fahrgastraums oder am Sitz selbst untergebracht ist und die Schaltungen zum Zuführen von elektrischer Leistung zu den Motoren enthält, die so ausgelegt sind, dass sie die verschiedenen Teile des Sitzes in beide Drehrichtungen bewegen, wobei die Auswahl der verschiedenen Steuerschaltungen durch einen Drehknopfschalter (4) erfolgt, der mit Kontakten (6) versehen ist, um eine oder mehrere der Schaltungen zu schließen, die elektrische Leistung zu den Motoren für jeden der zu bewegenden Teile (8, 10, 12, 14, 16) zuführen, und **dadurch gekennzeichnet, dass** jeder der Kontakte in Entsprechung mit einer hinterleuchteten Abbildung des Teils des Sitzes angeordnet ist, der durch den entsprechenden Kontakt bewegt werden kann; wobei die Abbildungen hinterleuchtet werden, wenn der entsprechende Kontakt durch den Drehknopfschalter (4) geschlossen wird.

2. Manuelle Steuerung nach Anspruch 1, **dadurch gekennzeichnet, dass** der Knopf (4) eine Ringform aufweist und dass innerhalb desselben und koaxial dazu eine kreisförmige Kipptaste (20) mit vier Bedienstellen vorhanden ist, die an den vier Haupthimmelsrichtungen angeordnet sind, um die Teile des Sitzes, die durch den Knopf (4) ausgewählt wurden, vertikal und horizontal in beide Richtungen zu bewegen.

3. Manuelle Steuerung nach Anspruch 1, **dadurch gekennzeichnet, dass** auf den hinterleuchteten Abbildungen (8, 10, 12, 14, 16) die Richtungen der Bewegung der entsprechenden Teile des Sitzes durch Pfeile angezeigt sind.

## Revendications

1. Commande manuelle pour régler la position du siège d'un véhicule à moteur afin de permettre le déplacement vertical et longitudinal des différentes parties constituantes du siège, la commande étant située dans un boîtier logé dans une partie de l'habitacle ou sur le siège lui-même, et contenant les circuits destinés à fournir une puissance électrique aux moteurs adaptés pour déplacer les différentes parties du siège dans les deux directions de rotation, la sélection des différents circuits de commande étant réalisée au moyen d'un bouton de rotation (4) doté de contacts (6) pour fermer un ou plusieurs des circuits fournissant la puissance électrique aux moteurs pour chacune des pièces (8, 10, 12, 14, 16) devant être déplacée, et **caractérisée en ce que** chacun desdits contacts est placé de manière à correspondre à un chiffre rétroéclairé représentant la partie du siège qui peut être déplacée au moyen du contact correspondant ; lesdits chiffres étant rétroéclairés lorsque le contact correspondant est fermé par le bouton rotatif (4).

2. Commande manuelle selon la revendication 1, **caractérisée en ce que** le bouton (4) présente une forme annulaire et qu'à l'intérieur de celui-ci et coaxialement à celui-ci, se trouve un bouton circulaire à bascule (20) avec quatre points de fonctionnement situés aux quatre points cardinaux destiné à déplacer verticalement et horizontalement dans les deux directions les parties du siège qui ont été choisies au moyen du bouton (4).

3. Commande manuelle selon la revendication 1, **caractérisée en ce que** sur les chiffres rétroéclairés (8, 10, 12, 14, 16) les directions du déplacement des parties correspondantes du siège sont indiquées au moyen de flèches.
